## Europäisches Patentamt

## European Patent Office

## Office européen des brevets

(11) Veröffentlichungsnummer: **0 395 904**

**A2**

(12) # EUROPÄISCHE PATENTANMELDUNG

(21) Anmeldenummer: **90106472.5**

(22) Anmeldetag: **05.04.90**

(51) Int. Cl.⁵: **B60H 1/00**

(30) Priorität: **02.05.89 DE 3914445**

(43) Veröffentlichungstag der Anmeldung:
**07.11.90 Patentblatt 90/45**

(84) Benannte Vertragsstaaten:
**DE FR GB**

(71) Anmelder: **ROBERT BOSCH GMBH**
**Postfach 10 60 50**
**D-7000 Stuttgart 10(DE)**

(72) Erfinder: **Berger, Joachim, Dipl.-Ing.**
**Falkenstrasse 11**
**D-7065 Winterbach(DE)**

(54) **Verfahren zum Schalten einer Kfz-Klimaanlage.**

(57) Das Ein- und Ausschalten einer Klimaanlage wird in erster Linie durch Signale bestimmt, wie sie von einer Temperaturregelung abgegeben werden. Es gibt jedoch auch Betriebszustände, in denen die Temperaturregelung das Signal "Ein" ausgibt, das Betreiben der Klimaanlage aber nicht erwünscht ist, um das Drehmoment der Brennkraftmaschine so weit wie möglich zum Fahrzeugantrieb zur Verfügung zu haben. Bei erfüllter Temperatur-Einschaltbedingung wird daher noch das Erfülltsein von Sonderbedingungen zum Ausschalten und Wiedereinschalten der Klimaanlage untersucht.

Die Klimaanlage wird dann ausgeschaltet, wenn die Pedalstellung einen Ausschalt-Schwellenwert übersteigt, und die Differenz zwischen der aktuellen zulässigen Vollastmenge und der aktuell gültigen Leerlaufmenge kleiner als eine vorgegebene Mindestdifferenz ist. Wieder eingechaltet wird, wenn entweder die Pedalstellung für mindestens eine vorgegebene Zeitspanne unter einem Einschalt-Schwellenwert bleibt oder wenn die Drehzahl über einen Drehzahl-Schwellenwert steigt.

F i g . 2

EP 0 395 904 A2

## Technisches Gebiet

Die Erfindung betrifft ein Verfahren zum Schalten der Klimaanlage eines Fahrzeugs mit Brennkraftmaschine, welche Klimaanlage dann durch Sonderbedingungen geschaltet werden kann, wenn bereits durch die Temperaturregelung ein Einschaltsignal gegeben ist.

## Stand der Technik

In Serie befindlich ist eine Motorsteuerung, bei der die Klimaanlage, wenn sie durch den Temperaturregler eingechaltet worden ist, wieder abgeschaltet wird, sobald die Sonderbedingung "Vollgas" eintritt. Genauer gesagt, reicht diese einzige Sonderbedingung zum Abschalten nur aus, wenn ein Fahrzeug mit Automatikgetriebe vorliegt. Bei einem Fahrzeug mit Schaltgetriebe führt die Sonderbedingung "Vollgas" nur zum Abschalten der Klimaanlage, wenn zusätzlich die Sonderbedingung erfüllt ist, daß der erste Gang eingelegt ist.

Weiterhin ist es bekannt, vor Inbetriebnahme der Klimaanlage die Leistungsabgabe der Brennkraftmaschine zu erhöhen. Verfahren hierzu sind in DE 38 29 635 beschrieben. Auch bei Anwendung solcher Verfahren ist vorgesehen, das Einschalten ganz zu unterlassen, wenn die Brennkraftmaschine mit Vollast betrieben wird.

Bei allen bekannten Verfahren erfolgt das Wiedereinschalten der Klimaanlage nach dem Abschalten derselben wegen Erfülltseins von Sonderbedingungen dann, sobald die Sonderbedingungen nicht mehr erfüllt sind.

Es besteht grundsätzlich der Wunsch, Verfahren zum Schalten einer Klimaanlage so auszugestalten, daß die Klimaanlage in solchen Zeiträumen nicht betrieben wird, obwohl die Temperaturregelung das Signal "Ein" ausgibt, in denen es erwünscht ist, das von der Brennkraftmaschine abgegebene Drehmoment so weit wie möglich für den Antrieb zur Verfügung zu haben.

## Darstellung der Erfindung

Erfindungsgemäße Verfahren betreffen sowohl Sonderbedingungen zum Ausschalten wie auch solche zum Wiedereinschalten einer Klimaanlage. In bezug auf ein Ausschalten ist insbesondere die Bedingung von Bedeutung, daß die Differenz zwischen der aktuell zulässigen Vollastmenge und der aktuell gültigen Leerlaufmenge unter einem Schwellenwert liegt. Liegt diese Differenz über dem Schwellenwert, darf die Klimaanlage immer betrieben werden. Ist die Schwelle dagegen unterschritten und überschreitet gleichzeitig die Pedalstellung einen Ausschalt-Schwellenwert, wird die durch die Temperaturregelung eingeschaltete Klimaanlage ausgeschaltet. Es soll dann die gesamte Kraftstoffmenge zur Beschleunigung zur Verfügung stehen. Abgeschaltet wird vorzugsweise nicht sofort dann, wenn eine dieser beiden Sonder bedingungen nicht mehr erfüllt ist, sondern erst dann, wenn die Pedalstellung für eine vorgegebene Zeit unter einem Einschalt-Schwellenwert liegt oder wenn die Drehzahl einen Drehzahl-Schwellenwert übersteigt.

Alle eben genannten Ausschalt- und Einschaltbedingungen können sowohl gemeinsam wie auch jeweils einzeln angewandt werden.

## Zeichnung

Fig. 1 Blockschaltbild einer Klimaanlagensteuerung; und

Fig. 2 Flußdiagramm zum Erläutern eines Verfahrens zum Aus-und Wiedereinschalten einer Klimaanlage abhängig vom Erfülltsein von Sonderbedingungen.

## Beschreibung von Ausführungsbeispielen

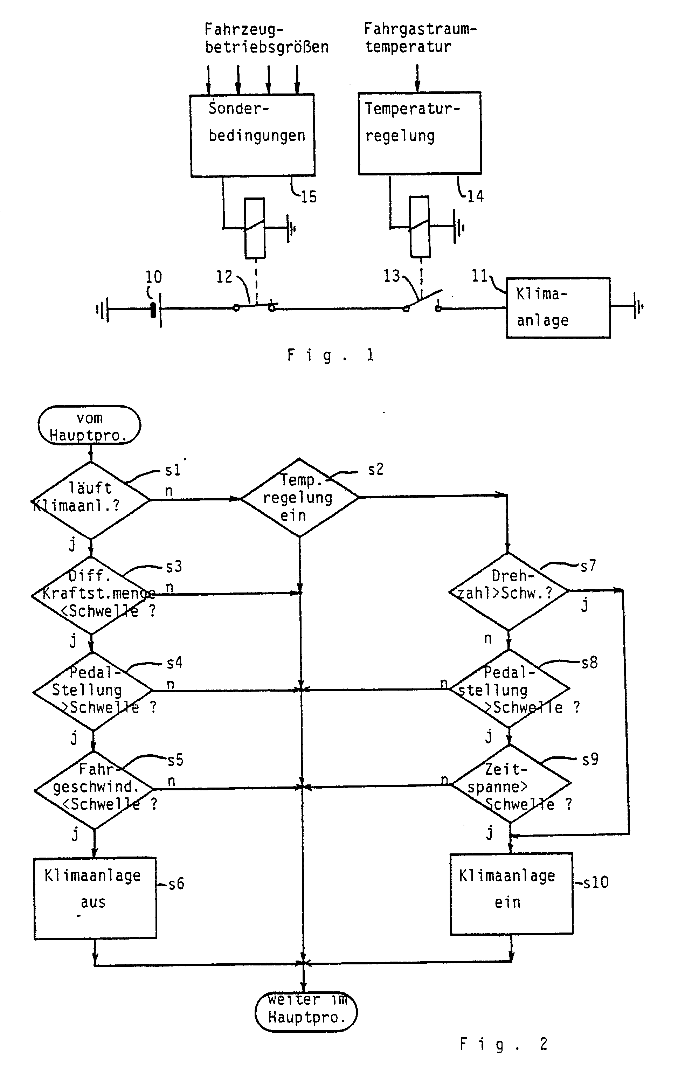

Bei der Schaltung gemäß Fig. 1 sind zwischen eine Batterie 10 und eine Klimaanlage 11 ein Sonderbedingungsschalter 12 und ein Temperaturreglerschalter 13 gelegt. Der Sonderbedingungsschalter 12 ist meistens geschlossen. Das Ein- und Ausschalten der Klimaanlage 11 wird dann allein durch den Temperaturreglerschalter 13 bewerkstelligt. Dieser wird von einer Temperaturregelung 14 angesteuert, der die Fahrgastraumtemperatur zugeführt wird, und die diese mit einer Solltemperatur vergleicht. Der Sonderbedingungsschalter 12 wird von einer Sonderbedingungs-Ermittlungseinrichtung 15 angesteuert, der Fahrzeugbetriebsgrößen zugeführt werden.

Ein Ausführungsbeispiel dafür, wie die Sonderbedingungs-Feststelleinrichtung 15 Ein- und Ausschaltsignale aus diesen Fahrzeugbetriebsgrößen bildet, wird nun anhand von Fig. 2 erläutert.

Der Verfahrensablauf gemäß Fig. 2 wird durch ein Rechnerprogramm ausgeführt, das innerhalb eines Hauptprogramms aufgerufen wird. In einem Schritt s1 wird untersucht, ob die Klimaanlage läuft. Ist dies nicht der Fall, wird in einem Schritt s2 untersucht, ob die Temperaturregelung das Signal "Ein" zum Einschalten der Klimaanlage abgibt. Ist dies nicht der Fall, wird das Hauptprogramm weiter abgearbeitet.

Ergibt sich in Schritt s1 jedoch, daß die Klimaanlage läuft, wird in Folgeschritten s3 - s5 untersucht, ob Sonderbedingungen erfüllt sind, die zu einem Ausschalten der Klimaanlage führen. In einem Schritt s3 wird die Differenz zwischen derjenigen Kraftstoffmenge berechnet, die unter Vollast bei den aktuellen Betriebsbedingungen zulässig ist, und derjenigen Kraftstoffmenge, die für die aktuellen Betriebsbedingungen für den Leerlauffall gilt. Die zulässige Vollastmenge hängt insbesondere vom Luftdruck ab. In großer Höhe darf z. B. erheblich weniger Kraftstoff eingespritzt werden als bei Fahrt auf Meereshöhe, wenn das Gemisch nicht überfettet werden soll. Die aktuell gültige Leerlaufmenge hängt insbesondere von der Motortemperatur und der Drehzahl ab. Über einer gewissen Schwellendrehzahl, z. B. 1200 U/min, ist die Leerlaufmenge Null, unabhängig von weiteren Bedingungen. Im tatsächlichen Leerlauf beträgt die Kraftstoffmenge bei einem 2,4 l-Sechszylinder-Dieselmotor etwa 5 mg/Hub bei warmem und etwa 10 mg/Hub bei kaltem Motor. Die Vollastmenge bei Fahrt in Meereshöhe beträgt etwa 25 mg/Hub.

Wenn die genannte Differenz über einer vorgegebenen Mindestdifferenz liegt, kann die Klimaanlage auf jeden Fall weiterlaufen. Es werden dann keine weiteren Bedingungen mehr untersucht; das Hauptprogramm wird weiter abgearbeitet. Die Mindestdifferenz im Beispielsfall beträgt 50 % der Vollastmenge.

Ergibt sich im Schritt s3, daß die Mindestdifferenz unterschritten ist, wird im Schritt s4 untersucht, ob die Pedal stellung über einem Abschalt-Schwellenwert liegt. Beim Ausführungsbeispiel ist dieser Schwellenwert 60 % des maximalen Verstellweges. Liegt die Pedalstellung unter diesem Schwellenwert, kann die Klimaanlage auf jeden Fall weiterbetrieben werden. Das Teilprogramm gemäß Fig. 2 wird dann beendet und das Hauptprogramm wird weiter abgearbeitet.

Ergibt sich jedoch in Schritt s4, daß der Ausschalt-Schwellenwert für die Pedalstellung überstiegen ist, wird in Schritt s5 überprüft, ob die Fahrgeschwindigkeit unterhalb einer vorgegebenen Schwelle liegt. Für ein Fahrzeug mit Handschaltgetriebe ist diese Schwellengeschwindigkeit im Ausführungsbeispiel 20 km/h, während sie für ein Fahrzeug mit Automatikgetriebe 40 km/h ist. Liegt die Fahrgeschwindigkeit über dieser Schwellengeschwindigkeit, kann die Klimaanlage weiterlaufen. Das Teilprogramm gemäß Fig. 2 wird beendet und das Hauptprogramm wird weiter abgearbeitet.

Ist jedoch auch die Bedingung gemäß Schritt s5 erfüllt, wird in einem Schritt s6 die Klimaanlage ausgeschaltet. Das Hauptprogramm wird weiter abgearbeitet, bis wieder Schritt s1 erreicht ist. Es ergibt sich, daß die Klimaanlage nicht läuft, weswegen, wie eingangs beschrieben, Schritt s2 erreicht wird. Es wird festgestellt, daß die Temperaturregelung das Signal "Ein" ausgibt. Da aber dennoch die Klimaanlage nicht läuft, wie dies in Schritt s1 festgestellt wurde, kann dies nur bedeuten, daß bei einem früheren Programmdurchlauf die Sonderbedingungen gemäß den Schritten s3 - s5 erfüllt waren, so daß die Klimaanlage in Schritt s6 wegen des Erfülltseins der Sonderbedingungen ausgeschaltet wurde. Es ist dann zu prüfen, ob die Klimaanlage wieder eingeschaltet werden kann. Dies erfolgt in Schritten s7 - s9.

In Schritt s7 wird untersucht, ob ein Drehzahl-Schwellenwert überstiegen ist. Beim Ausführungsbeispiel ist dies der Wert 2000 U/min. Ist der Wert überschritten, kann die Klimaanlage sofort wieder eingeschaltet werden, was in einem Schritt s10 erfolgt. Anschließend an diesen Schritt wird das Hauptprogramm weiter abgearbeitet.

Ergibt sich dagegen in Schritt s7, daß die Drehzahl noch unter dem Drehzahl-Schwellenwert liegt, wird im Schritt s8 untersucht, ob die Pedalstellung unter einen Einschalt-Schwellenwert gefallen ist. Ist dies nicht der Fall, wird nichts Weiteres unternommen, sondern das Hauptprogramm wird weiter abgearbeitet. Der Einschalt-Schwellenwert im Ausführungsbeispiel beträgt 30 % des maximalen Pedalwertes.

Ergibt sich in Schritt s8, daß die Pedalstellung unter den Einschalt-Schwellenwert gefallen ist, wird im Schritt s9 überprüft, ob diese Bedingung für mindestens eine vorgegebene Zeitspanne erfüllt ist. Die Zeitspanne im Ausführungsbeispiel beträgt 2 Sekunden. Sie dient dazu, daß es nicht zum Einschalten und kurz darauf erfolgenden Wiederausschalten der Klimaanlage kommt, wenn die Bedingung gemäß Schritt s8 nur deswegen kurzzeitig erfüllt ist, weil bei einem Fahrzeug mit Handschaltgetriebe während des Schaltvorgangs vom Gas gegangen wird. Grundsätzlich soll vermieden werden, unabhängig von der Getriebeart, daß nur kurzzeitiges Weggehen vom Fahrpedal ein kurzfristiges Einschalten der Klimaanlage bewirkt. Ist jedoch die vorgegebene Zeitspanne überschritten, wird die Klimaanlage durch den Schritt s10 eingeschaltet.

Das Ausführungsbeispiel kann in vielfältiger Weise abgewandelt werden. So ist es insbesondere möglich, zwar die genannten Ausschaltbedingungen zu verwenden aber andere Einschaltbedingungen, oder umgekehrt. Für die Einschaltbedingungen kann insbesondere die Lehre gemäß dem Stand der Technik verwendet werden, daß nämlich eine Einschaltbedingung immer dann vorliegt, wenn die Ausschaltbedingungen nicht mehr erfüllt sind.

Statt allen drei Bedingungen gemäß den Schritten s3 - s5 zum Ausschalten der Klimaanlage können auch nur die Bedingungen gemäß den Schritten s3 und s4 oder s4 und s5 eingesetzt werden. Alle diese Varianten unterscheiden sich vom Stand der Technik dadurch, daß nicht mehr nur die reine Pedalstellungsuntersuchung gemäß Schritt s4 ausgeführt wird, sondern daß die Ausschaltbedingung verfeinert ist. Welche Bedingungen zweckmäßigerweise verwendet werden, hängt stark davon ab, welche Größen ohnehin gemessen und berechnet werden. So wird bei den meisten Fahrzeugen mit Dieselmotor die Fahrgeschwindigkeit gemessen, so daß es problemlos ist, die Bedingung gemäß Schritt s5 mitzüberücksichtigen. Bei Fahrzeugen mit Benzinmotor ist es dagegen derzeit noch die Ausnahme, die Fahrgeschwindigkeit zu messen. Man wird sich daher mit den Bedingungen gemäß den Schritten s3 und s4 als Ausschaltbedingungen begnügen.

**Ansprüche**

1. Verfahren zum Schalten der Klimaanlage eines Fahrzeugs mit Brennkraftmaschine in Abhängigkeit vom Erfülltsein von Sonderbedingungen, wenn für die Klimaanlage eine Temperatur-Einschaltbedingung erfüllt ist,
**dadurch gekennzeichnet, daß**
- die Differenz zwischen der aktuell zulässigen Vollastmenge und der aktuell gültigen Leerlaufmenge berechnet wird,
- die aktuelle Pedalstellung ermittelt wird,
- und die Klimaanlage ausgeschaltet wird, wenn
-- die Differenz kleiner als eine vorgegebene Mindestdifferenz ist,
-- und gleichzeitig die Pedalstellung einen Ausschalt-Schwellenwert übersteigt.

2. Verfahren nach Anspruch 1, **dadurch gekennzeichnet, daß** zum Auslösen des Abschaltens zusätzlich zu den vorgenannten zwei Sonderbedingungen die Bedingung untersucht wird, ob die Fahrgeschwindigkeit unter einer Schwellengeschwindigkeit liegt und die Klimaanlage dann abgeschaltet wird, wenn alle drei Bedingungen erfüllt sind.

3. Verfahren zum Schalten der Klimaanlage eines Fahrzeugs mit Brennkraftmaschine in Abhängigkeit vom Erfülltsein von Sonderbedingungen, wenn für die Klimaanlage eine Temperatur-Einschaltbedingung erfüllt ist, insbesondere Verfahren nach einem der Ansprüche 1 oder 2,
**dadurch gekennzeichnet, daß**
- ermittelt wird, ob die Klimaanlage durch das Erfülltsein von Sonderbedingungen ausgeschaltet wurde,
- die aktuelle Pedalstellung ermittelt wird,
- und die Klimaanlage dann nach dem Ausschalten durch das Erfülltsein von Sonderbedingungen wieder eingeschaltet wird, wenn die Pedalstellung für mindestens eine vorgegebene Zeitspanne unter einem Einschalt-Schwellenwert bleibt.

4. Verfahren zum Schalten der Klimaanlage eines Fahrzeugs mit Brennkraftmaschine in Abhängigkeit vom Erfülltsein von Sonderbedingungen, wenn für die Klimaanlage eine Temperatur-Einschaltbedingung erfüllt ist, insbesondere Verfahren nach einem der Ansprüche 1 - 3,
**dadurch gekennzeichnet, daß**
- ermittelt wird, ob die Klimaanlage durch das Erfülltsein von Sonderbedingungen ausgeschaltet wurde,
- die aktuelle Drehzahl ermittelt wird,
- und die Klimaanlage dann nach dem Ausschalten durch das Erfülltsein von Sonderbedingungen wieder eingechaltet wird, wenn die Drehzahl über einem Drehzahl-Schwellenwert liegt.

Fahrzeugbetriebsgrößen

Fahrgastraumtemperatur

Sonderbedingungen

Temperaturregelung

15

14

10

12

13

11

Klimaanlage

F i g .  1

vom
Hauptpro.

s1
läuft
Klimaanl.?
n

s2
Temp.
regelung
ein

j

s3
Diff.
Kraftst.menge
<Schwelle ?
n

s7
Dreh-
zahl>Schw.?
j

j

n

s4
Pedal-
Stellung
>Schwelle ?
n

s8
Pedalstellung
>Schwelle ?
n

j

j

s5
Fahrgeschwind.
<Schwelle ?
n

s9
Zeit-
spanne>
Schwelle ?
n

j

j

Klimaanlage
aus
s6

Klimaanlage
ein
s10

weiter im
Hauptpro.

F i g .  2